# EUROPEAN PATENT SPECIFICATION

(11) **EP 3 313 195 B1**
(45) Date of publication and mention of the grant of the patent: **09.01.2019**
(21) Application number: 16805207.4
(22) Date of filing: 17.10.2016
(51) Int. Cl.: A23G 9/04, A23G 9/22, A23G 9/28

(54) **A MACHINERY AND RELATED METHOD FOR PROCESSING AND SELLING ICE CREAM EXTEMPORANEOUSLY**
MASCHINE UND ENTSPRECHENDES VERFAHREN ZUM UNMITTELBAREN VERARBEITEN UND VERKAUFEN VON SPEISEEIS
ÉQUIPEMENT ET PROCÉDÉ CORRESPONDANT DE TRANSFORMATION ET DE VENTE DE CRÈME GLACÉE EXTEMPORANÉMENT

(30) Priority: 22.12.2015 IT UB20159595
(43) Date of publication of application: 02.05.2018
(73) Proprietor: Mazzuto, Antonio, 74122 Taranto (IT)
(72) Inventor: Mazzuto, Antonio, 74122 Taranto (IT)
(74) Representative: Emmi, Mario
(86) International application number: PCT/IB2016/056204
(87) International publication number: WO 2017/109596

(56) References cited:
- DE-U1-202006 008 741
- GB-A- 513 167
- US-A- 1 482 490
- US-A- 1 607 880
- US-A- 2 101 599
- US-A1- 2006 292 289

## Description

### Field of the invention

The present Invention is defined by the claims and relates to the technical field pertaining to ice cream processing machinery.

In particular, the invention relates to innovative ice cream processing/distribution machinery that is capable of procossing and supplying ice cream when it is requested by the buyer, which ice cream, in accordance with the processing of said machinery, does not require emulsifiers, thickeners and preservatives.

### Background of the invention

Ice cream counters for retail sales, which are formed by a series of pans with a refrigeration system to keep the ice cream at the ideal temperature have been known for some time. The metal, tubs into which the ice cream is placed, once it has been prepared, are removably insertable into the pans.

A plurality of pans allows the insertion of a plurality of tubs, each one intended to contain a certain type of ice cream.

When a user buys an ice cream, the ice cream vendor collects a certain amount of ice cream from the corresponding tub with the scoop and places it on a wafer or in a suitable bowl.

The ice cream, inside the tubs, must stand for all the time necessary until it is all sold. At the same time, however, it must retain softness and creaminess, in order to be appetising and of good quality. Obviously, when just prepared, the ice cream is creamy and soft to the right point, but after a certain standing time in the refrigerator inside the tub, it starts to lose its qualities. During preparation, it is therefore necessary to add various emulsifiers and thickeners to the ice cream that help maintain the quality, consistency and creaminess of ice cream over time. The addition of these substances obviously makes the ice cream less genuine and, in any case, artificially processed. All of this also contributes to the alteration of a natural flavour. Tn addition, once a certain period of time has elapsed, the quality of the ice cream begins to decline, despite the addition of these substances, losing creaminess, and if the ice cream remains unsold for a certain period of time, it will then be necessary to discard it, with considerable product wastage and related financial loss.

In particular, in the traditional production process, the ice cream preparation is batch frozen in a batch freezer that operales at about -20°C, mixing the product with a mixer and the finished product, once batch frozen, is at a temperature of approximately -6° C. When the processing process is complete, it is inserted into the tubs and is ready for sale. The temperature of the sales refrigerator is such as to keep the ice cream at about -10°C so that it is scoopable while not altering the creaminess thereof, and there are required complex cold ventilation systems that uniformly keep the ice cream at the aforementioned temperature. Nevertheless, as said, over time the ice cream loses its quality and, at the end of the day, often has a distinctly inferior creaminess than when it was produced. On the same or next day, it is then necessary to proceed with a new batch freezing of the product that has remained unsold, adding the base mixture in order to be able to regenerate and resell it. The quality oE the reprocessed product is obviously worse than the criginal product in that these repeated batch freezing processes cause a loss of product volume and the need to dilute it by adding the base mixture. Moreover, these regeneration procedures that entail thermal shocks break the cold chain and are therefore inadvisable and in some cases prohibited by law.

Ultimately, the technology currently known for the preparation and the sale of Lee crcam demands and requires the use of additional chemical substances for the maintenance of the product, which, nevertheless, declines if quality over time. In the beat of cases, natural substances such as carcb seed flour, which can cause allergy, can be used. Complex and costly machinery, indeed such as the refrigorator counters with ventilation, are also required to maintain the ice cream and the creaminess thereof insofar as possible. Lastly, it is often necessary to have to operate multiple batch freezing cycles of the residual, product, all requiring additional work at the expense of a worse produce quality.

Of the various ice cream processing machinery, the GB513167 publication, which corresponds to the preamble of claim 1, is known.

In this publication there is described machinery adapted to ice cream processing, in particular to the preparation of ice cream biscuits wherein a layer of ice cream is Interposed between two layers of biscuit.

The machinery envisages a first piston that presses the ice cream in a collection chamber, creating a layer having a predetermined thickness. A second piston, which moves in a direction perpendicular to that of the first piston, pushes the layer of ice cream into a processing section where it is inserted between the wafers of the biscuit. In this section there is therefore present a grid through which the ice cream product can be passed so that passing through the holes of the grid, each tole determines the formation of a portion that is laid on the underlying biscuit placed on a collection shelf. This pushing action through the grid is operated by means of a third piston parallel to the first piston.

It is obvious that this machinery, although useful for preparing ice cream biscuits is not capable of producing a cone ice cream extemporaneously and of good quality, without therefore requiring preservatives, emulsifiers, etc.

The grid and the third piston are in fact arranged to allow a single and mique passage of the ice cream through the grid for the sole purpose of being able to cut a portion of ice cream to arrange on the underlying biscuits. The system is not able to operate multiple passages between the grid and tho grid has holes sized to create precise portions of ice cream that reproduce the shape of the underlying biscuit.

### Summary of the invention

It is therefore object of the present invention to provide machinery that allows the aforementioned technical drawbacks to be overcome.

In particular it is object of the present invention to provide machinery which allows an extemporaneous and quick preparation or a predetermined amount of ice cream, which maintains creaminess and consistency without the need to have to add synthetic chemical substances, such as emulsifiers and thickeners.

It is also object of the present invention to provide a particularly simple and economical machinery that eliminates the need to have to batca freeze the product itself multiple times and that does not require complex cooling systems.

These and other objects are achieved with the present machinery for the extemporaneous processing of ice cream, according to claim 1.

This machinery (1) comprises:
- A processing chamber (40) adapted to receive the ice cream product (100) and delimited by a first actuator element (8; 280) and a second actuator element (5; 250) movable along a processing direction;
- An opening (30) that gives access to said processing chamber (40);
- At least one baffle (6; 260) placed inside this processing chamber (40) and that separates said chamber into two parts (40', 40"; 240', 240"), said baffle (6; 260) being equipped with a plurality of through openings;

according to the invention the first actuator element (8; 280) and the second actuator element (5; 250) are opposed to each other, i.e. placed one opposite the other along a processing direction, and with the baffle (6; 260) interposed therebetween;

There is also comprised a control system that controls said first actuator element (8; 280) and second actuator element (5; 250) according to a moving away/moving closer: to/from the baffle (6; 260) motion in such a way that the ice cream product (100) placed inside the processing chamber (40) is pushed multiple times from one part to the other of the baffle through the pluralityof openings with which it is equipped.

All the aforementioned technical problems are thus easily overcome.

In particular, it has been surprisingly found that, contrary to what the machinery described in the aforementioned GB513167 publication can perform, the passage, repeated multiple times, from one part and from the other through the baffle gives the product a considerable softness and creaminess, without the need to use specific additives.

The machinery described in GB513167, by virtue of the single pusher with which it is provided in front of the grid, cannot perform multiple product passages but one a lone and for the purpose of placing the portion on the biscuit.

The product can therefore be initially prepared in the traditional way in single doses but without any preservative, emulsifier or the like and preserved in a refrigerator (generally up to six months). At this point, the processing process that the machinery perfrorms bofore discharging it to sell it make it very soft and creamy, although no additives of any kind are present. The passage through the holes of the baffle in fact breaks the structure of the ice cream body and the frictional heat in the passage that develops further contributes to the softness.

It is therefore no longer necessary to operate new unsold product batch freezing cycles in that the product is prepared just once in single portions and preserved in special loaders placed on the machinery and maintained at the required temperature. When a customer requests an ice cream having one or more flavours, it is sufficient to operate the machinery and the individual single-dose/s is/are each inserted into the machinery and processed as described.

A perfectly creamy product that is ready to be scooped onto a wafer or other container/support, is ready in a few seconds.

In addition, the single doses prepared and arranged in tho loadors never suffer a breakage of the cold chain.

Complex cooling systems are also no longer required.

Essentially, the machinery brilliantly replaces traditional counters for the sale of ice cream with an economical and functional solution.

Further advantages are inferable from the dependent claims.

### Brief description of the drawings

Further characteristics and advantages of the present machinery, according to the invention, shall be more apparent with the following description of some embodiments theroof, provided by way of a non-limiting example, with reference to the accompanying drawings, in which:
- Figures 1 to 3 show an axonometric view of a first possible construction solution
- Figure 4 describes the configuration of a baffle;
- Figures 5 to 12 outline an operating cycle;
- Figures 13 and 14 outline variants of the invention.

### Description of some preferred embodiments

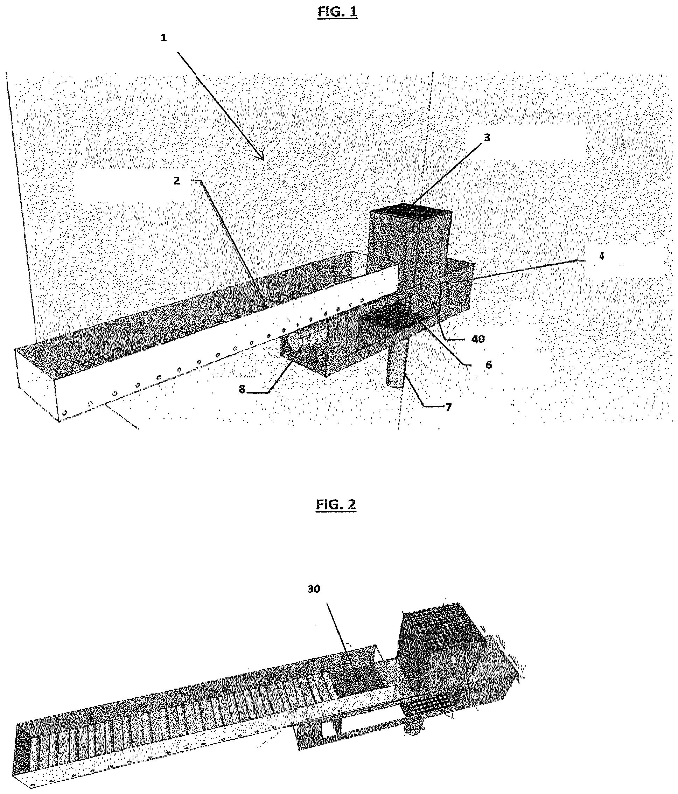

Figure 1 describes, in an axonometric view, the present machinery according to the invention.

It envisages a loader 2 through which a certain amount of ice cream preparation can be placed inside the machinery itself.

The loader 2 can for example be produced in the form of a plurality of rotating collors or conveyor belt in such a way that the portion of ice cream product (for example in cube Form, as better clarified below) can be moved toward the inside of the machinery and therefore processed.

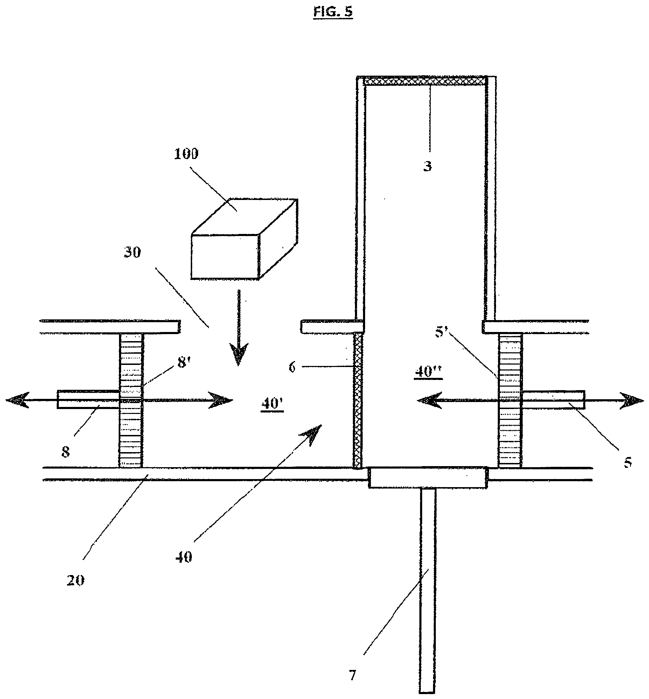

The loader 2 thus ends on an opening 30 (visible in figure 2) that grants access to a processing chamber 40 (more visible in the cross section of figure 5).

Loading, through the opening, can also take place manually by dropping the ice cream by gravity through the opening 30.

The machinery thus forms a collection chamber for the product which is, as said, a processing chamber for the product.

As shown in figures 1 to 3, the chamber has a square cross section, in that the frame 20 of the machine extends according to this shape. Other shapes could obviously be produced.

For example, as better clarified below, a circular cross sectional shape is preferred in that the other components are more functional.

As therefore better shown in the longitudinal cross section of figure 5, the processing chamber 40 is in the shape of a duct having a predetermined cross section (for example square as in the drawings or circular) and delimited at its two ends by a first 8 and a second actuator element 5 (or pushing elements, however you may refer to them), which are slidable along the chamber according to the double direction of travel indicated by the arrows shown figure 5. The actuator elements are therefore pushing surfaces.

These actuator elements can be in the form of electric, pneumatic or hydraulic pushers depending on requirements.

The pusher, as can be seen from the drawings, thus forms a flat push or thrust surface (8', 5', 7') and is provided with a rear rod that connects to the movement motor. The thrust surface, along its lateral perimeter (hence the part that slides on contact with the frame), can be accompanied by a suitable gasket so that the sliding with the wall of the chamber 40 occurs without the risk of product leakages.

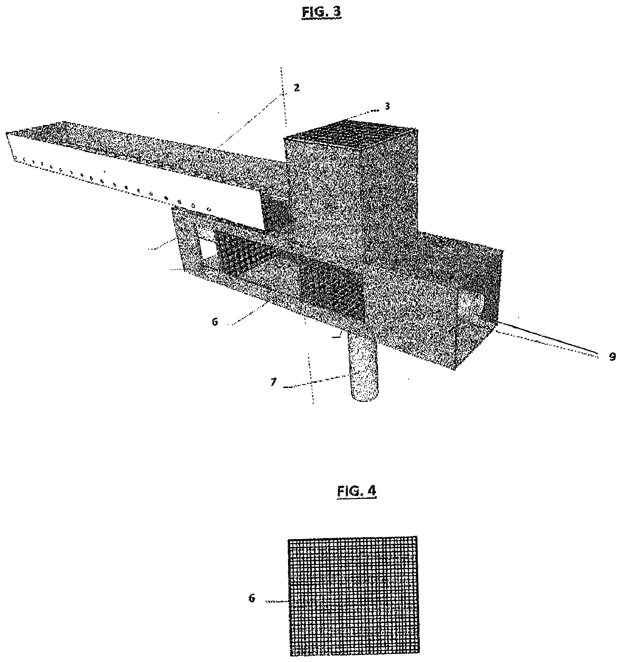

As always shown in figure 5, and also visible in figure 4 and in figures 1 to 3, inside said chamber 40 there is provided a baffle 6 that physically separates said chamber into two parts, i.e. a first part (40') delimited by the baffle and by the actuator 8 and a second part (40'') delimited by the baffle 6 and by the actuator 5. A first part of the chamber (40') therefore has a space delimited by the frame 20, the piston 8 and the baffle 6. The second part of the chamber (40") has a space delimited by the frame 20, baffle 6 and piston 5.

The actuators can thus slide along the chamber in such a way as to move closer to the baffle or move away thereFrom.

The two actuator elements are therefore opposed one against another according to a same work direction but with opposite directions.

The baffle, then then shown in figure 4, is in the form of a grid equipped with a plurality of through holes, exactly like a sort of sieve. It is transversely arranged In the chamber so as to physically divide it into said two parts (40', 40") and with the holes that extend along the direction of motion of said actuators (5, 8). The baffle is thus a dividing wall of the chamber 40 but provided with a plurality of through holes through which a fluid element can pass from one side to the other of the baffle.

Then at the second part (40") of the chamber, there is provided a third actuator element (7), which is arranged in such a way as to move along a direction perpendicular to the longitudinal axis of the chamber (40), thus a direction perpendicular to the direction of motion of the two actuators (8, 5).

Above the chamber 40, in line with the direction of motion of the third actuator element 7 and thus above the second part (40"), there is provided an outlet channel for the expulsion of the finished product that is pushed out thanks to the lifting of said third actuator element.

At the ond of this outlet conduit there can be arranged a further baffle with an opening for the outlet of the product. This baffle can have a single opening shaped with different shapes so that the product that is discharged adopts this decorative shape.

A control system controls, through special motors, the correct movement of the actuators and the correct synchronism thereof.

Approach speed, maximum distance and thrust force are calibrated.

In unison, the system can control the movement of tho conveyor belt.

The entire machinery is preferably maintained, for example through a refrigerated container, at a temperature of about -20°C or below this temperature, so that the processing occurs at these temperatures, in accordance with regulations on maintaining the ice cream at temperature during storage.

Although the standing time of the single-dose remains in the machinery is very brief and the order of seconds, maintaining the machinery at a predetermined temperature nevertheless contributes to not breaking the cold chain.

The shape of the collection chamber 40 with circular cross section, as mentioned, is preferred in that pistons (or pushers) are more easily produced and functional. The sliding thereof is in fact much more uniform and the interposition of gaskets that prevent lateral leakages is facilitated.

In the preferred configuration of the invention, as shown in the accompanying drawings, the inlet of the product takes place upstream of the baffle through the opening 30 white the expulsion of the processed product takes place downstream of the baffle where there is placed the third actuator element 7 that pushes out the product through the opening 3.

Nothing however would prohibit a solution with dropping by gravity of the finished product, without the need for the third actuator element, although obviously the preferred solution is much more functional.

In addition, if desired, tho third piston 7 could be arranged at the first part (40'), thus also exploiting the opening 30 as output for the finished product.

The baffle has a shape, rectangular of circular for example, with diametrical dimension of about 5cm or 6cm.

Holes can be provided with diametrical dimensions ranging from about 3mm to 8mm and with a variable number of holes, for example 12 to 40.

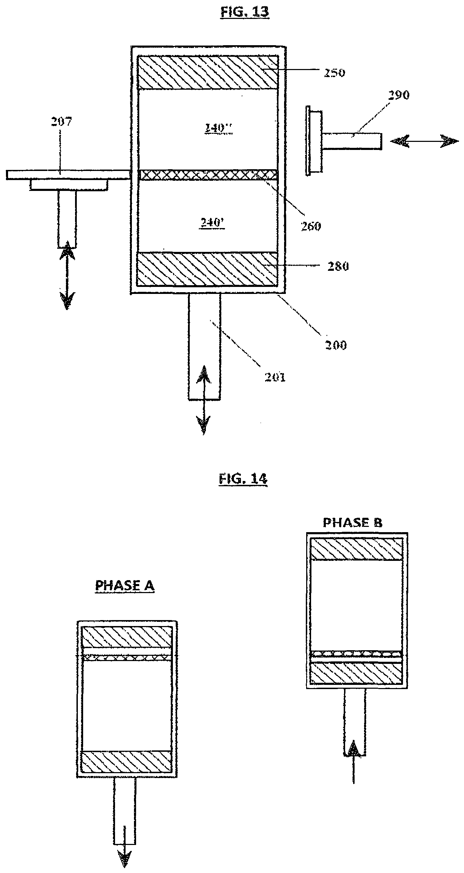

A. variant of the invention is described with reference to figures 13 and 14.

ln this case the two actuator elements 250 and 280 are fixed and made integral to a frame 200, for example a metal frame, thus forming a single integral body.

The frame is connected to a shaft and from here to a motor drive that moves this frame with respect to the fixed baffle 260. For clarity, figure 14 shows, by way of example, stop A and step B wherein said frame 200 slides vertically with respect to the baffle so as to move away/move closer the two surfaces 250 and 280 constituting the two actuator elements. Thus, with a downward movement of the frame, as per step A, the actuator element 250 moves closer to the baffle, thereby reducing the chamber 240" and forcing the product being processed to pass through the baffle toward the chamber 240'. Subsequently an inverse movement as per step B, in which the frame is raised, forces the product to pass through the baffle from the chamber 240' toward the chamber 240" in that the actuator element 280 moves closer to the baffle while the actuator element 250 moves away. The concept is thus identical to the previous configurations, with the only difference being that through this frame 200, made integral to the two actuator elements, it is possible to control tho movement thereof through a single motor drive connected to the shaft 201. There is thus a constructively simpler and more economical solution.

For completeness, figure 13 then shows a Further actuator element 290 that serves to push the product, first onto the baffle 260, and then, once processed, it continues Lo push it toward the actuator element 207 that directs it toward the outlet. Although not represented in figure 13, the actuator element 290 is shaped so as to delimit the product so as to contain it without laterally covering it during the pushing action.

This solution with frame 200 can be applied to all the described configurations, i.e. to all those relating to figures 1 to 12, wherein the machine extends with a horizontal processing Chamber or, as in the case of figure 3, with a machine wherein the processing chamber is vertical.

Having structurally described the invention, let us now move on to a description of the operation thereof, with reference to figures 5 to 12 and equivalently figures 13 and 14.

With reference to figure 5, there is shown a cube of ice cream 100 that is introduced into the collection chamber 40, through the conveyor belt 2 for example. The belt carries it to the mouth 30 where it falls by gravity into the chamber 40.

A plurality of single-portion cubes, of various flavours, are prepared beforehand. For each flavour, one proceeds with normal batch freezing of the product, however without the need to have to add any chemical additive, given that the processing process of the present machine allows, as has been clarified, a delicious and creamy product, to be obtained.

The batch frozen product is then portioned in the form of cubes, balls or other sing-e-dose shapes that can be stored at a storage temperature of about -20°C or below this temperature. They can be arranged within loaders that can be placed above tho conveyor belt or directly on the opening 30 (thus without the need for a belt) and machinery can be provided as described for each flavour. Essentially there can be envisaged a loader containing cubes of a single flavour arranged on the belt of the respective machine or on the mouth 30.

This machinery thus in parallel constitute an apparatus for the retail sale of ice cream in multiple flavours.

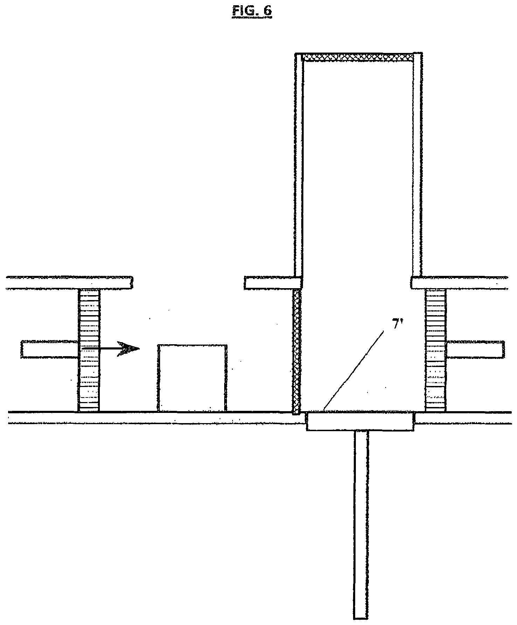

When a user requests a flavour, it is possible to select the corresponding loader that will drop the cube/cubes onto the corresponding conveyor belt 2 (or directly into the mouth) no that the cube 100 falls into the chamber 40 of the corresponding machine, as per figure 6.

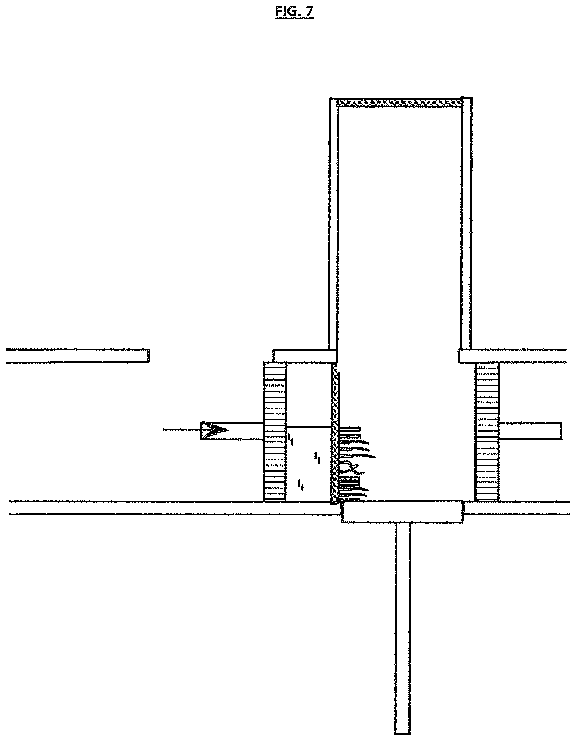

The access opening 30 drops the cube in part 40' of the chamber. The corresponding piston 8 is then operated so that it moves toward the baffle 6 pushing and forcing the cube to pass through the baffle while the other piston is in a backward position leaving a space that indeed forms the chamber 40" (see figure 7).

The pistons, preferably, are pushed with a force of about 200-250kg and the entire cycle described completes in a time of about 8-10 sec.

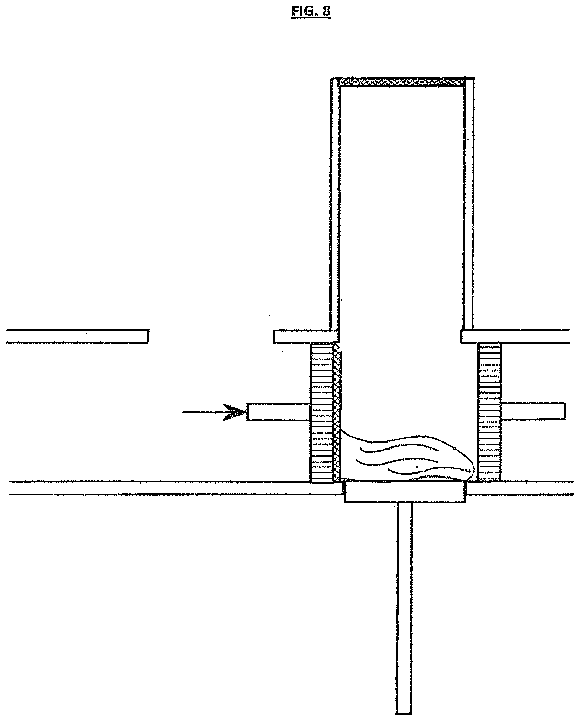

As per figure 6 and 7, the piston that pushes the product through the sieve ensures that the product flakes in the form of filaments in that it is forced to pass through the holes, until it has fully passed into part 40", as per figure 8.

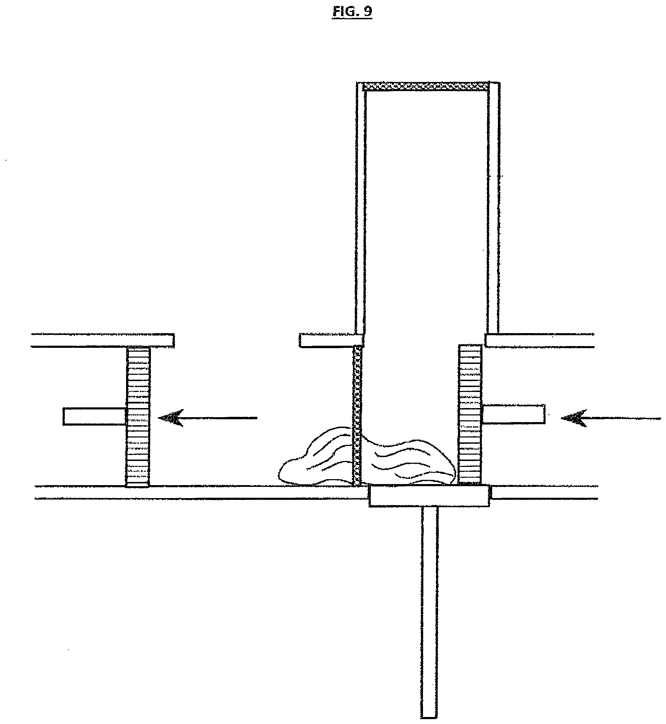

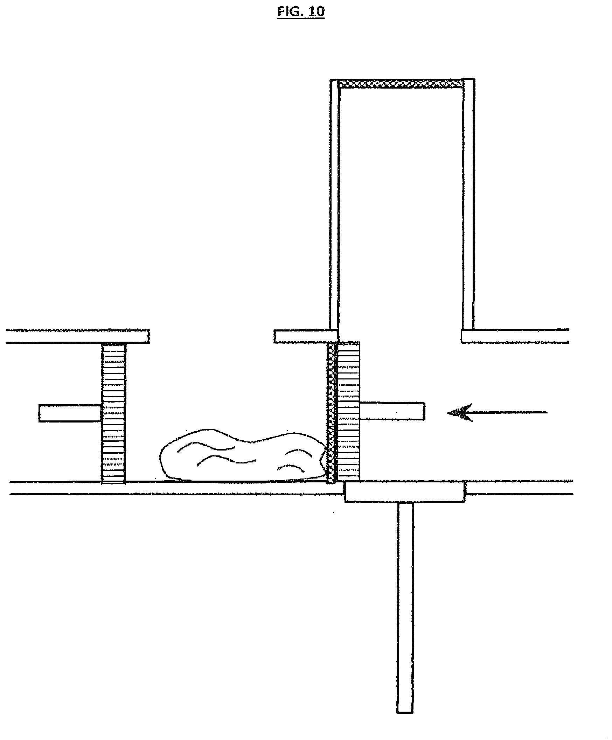

The piston 5, which is in a backward position precisely to create the space 40" for receiving the product, now moves forward toward the baffle while the other piston moves backward into the initial position to generate the space 40' for receiving the product. In this way, the piston 5 also again forces the passage of the product through the sieve and this passage is shown in the sequence of figure 9 and 10.

This passage cycle from one part to the other of the sieve can occur a variable number of times, for example two or more times, preferably three times or more than three. In any case, the number of passages must be such that at the end the processed product is placed in the part of the processing chamber where there is provided the outlet for the finished product. Therefore according to the figures, for example, processings can be performed with a number of passages of three, five, seven, etc, when the vertical piston 7 is placed on the part opposite to the inlet for the product. If, on the other hand, there is provided an outlet on the same part as the inlet for the product, then there could be provided an equal number of passage cycles through the baffle, for example two, four, etc.

Generally, although possible, only one passage from the first part of the chamber 40' to the second is insufficient to obtain a desired creaminess value. However, the thrust intensity and the number of passages can be adjusted as desired, in order to find a compromise that is deemed optimal.

The last passage is obviously the one in which the product is released into the part 40" of the chamber where there is the vertical piston 7 that is operated to discharge the product from the vertical conduit.

Figures from 9 to 11 show a series of passage steps until the product is ready to be expelled.

The machinery operates at a temperature of about -20°C with a pre-dosed cube that is also maintained at about -20°C. However, this forced passage through the baffle causes a breakage of the structure of the frozen product, which softens, and the heat that develops due to friction in the passage on the whole also contributes to further softening the product making it perfectly creamy and soft and with an even greater level of softness and creaminess than the traditional product prepared with the chemical additives.

Thanks to this machinery, it is no longer necessary to add any chemical product and there is no risk of product wastage.

The product prepared in the form of multiple single-dose portions, without additives, can be preserved for as long as desired (generally up to six months) in Loaders at the correct temperature and the described processing process, which lasts in the order of seconds, allows a soft ice cream, genuine and creamy ice cream to be served right away. This processing passage through the baffle in fact restores an even greater creaminess to the treated product.

The cubes are then prepared in the traditional, way without additives and can then bo distributed and sold to the owners of the present machine, without the cold chain ever breaking.

Therefore when a user requests a flavour for example, the owner operates the machine corresponding to the flavour selected and the described processing process starts with a series of product passages through the sieve.

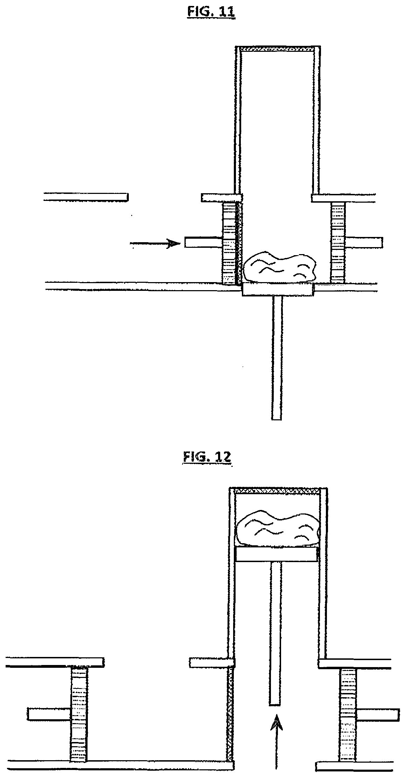

On completion of a certain number of passages, the product, ready for sale, is located above the vertical actuator 7, which pushes it along the outlet conduit, precisely toward the output 3, as per figure 12.

At this point the product is collected with a normal spatula and served in the classical way on a wafer or in a tub. According to this solution, a further advantage of the machinery is that it allows, once the finished product has been expelled, Lhe addition thereon of fresh fruit, almonds or anything else that may be desired to enrich the flavour.

On completion of a certain number of passages, the product, ready for sale, is located above the vertical actuator 7, which pushes it along the outlet conduit, precisely toward the output 3, as per figure 12.

At this point the product is collected with a normal spatula and served in the classical way on a wafer or in a tub. According to this solution, a further advantage of the machinery is that it allows, once the finished product has been expelled, the addition thereon of fresh fruit, almonds or anything else that may be desired to enrich the flavour.

If the baffle at the top has an opening having a predetermined shape (for example having a flower or star cross section), the creamy product will take this form, all to the benefit of a beautiful decoration.

The dimensions of this machinery are thus very contained, in that placeable as a direct sales counter and it is possible to arrange multiple such machinery in series, thus creating a battery, each one dedicated to processing and distributing (selling) the individual flavour. It therefore effectively and economically replaces the current counters of traditional ice cream parlours.

## Claims

1. Machinery (1) for the extemporaneous processing of ice cream (100) and comprising:
- A processing chamber (40) adapted to receive the ice cream product (100) and delimited by a first actuator element (8; 280) and a second actuator element (5; 250) movable along a processing direction;
- An opening (30) that gives access to said processing chamber (40);
- At least one baffle (6; 260) placed inside the processing chamber (40) and that separates said processing chamber (40) into two parts (40', 40"; 240', 240"), said baffle (6; 260) being equipped with a plurality of through openings;
- wherein said first actuator element (8; 280) comprises a thrust surface (8') and second actuator element (5; 250) comprises a thrust surface (5'); the machine being **characterised in that** the first and the second actuator element are opposed to each other and the baffle (6; 260) is positioned in the space of the processing chamber (40) delimitated by said thrust surfaces (5', 8');
- and wherein there is comprised a control system that controls said first actuator element (8; 280) and second actuator element (5; 250) according to a moving away/moving closer to/from the baffle (6; 260) motion in such a way that the product (100) placed inside the processing chamber (40) is pushed by said actuator elements (5, 8; 250, 280) multiple times from one part to the other of the baffle through the plurality of openings with which it is equipped.

2. Machinery (1), according to claim 1, wherein there is provided an outlet (3) for the processed product and a movable third actuator element (7) adapted to push the processed product through the outlet.

3. Machinery (1), according to claim 1 or 2, wherein said actuator elements (5, 7, 8) are in the form of pistons, of the type chosen from:
- Electrical;
- Hydraulic:
- Pneumatic.

4. Machinery (1), according to any one of the preceding claims, wherein said control system is programmed in such a way that, when the first actuator element (8) is moved forward toward the baffle (6), forcing the product to pass through the openings of the baffle, the second actuator element (5) is moved backward in such a way as to leave the space (40") for receiving the product to then operate said second actuator element toward the baffle (6) in such a way as to again push the product through the baffle in the direction opposite to the previous one while the first actuator element is brought back into the backward position to generate the space (40') for receiving the product.

5. Machinery (1), according to any one of the preceding claims, wherein said processing chamber (40) extends horizontally.

6. Machinery (1), according to any one of the preceding claims, wherein the outlet is formed by a conduit that extends vertically with respect to the processing chamber (40).

7. Machinery (1), according to any one of the preceding claims, wherein the baffle (6) is positioned transversally in the processing chamber (40) so as to physically divide the processing chamber into said two parts (40', 40") and with through holes that extend along the direction of motion of said actuator elements.

8. Machinery (1), according to any one of the preceding claims, wherein the two actuator elements (250, 280) are integral to a frame (200) controlled by means of a motor drive.

9. Machinery, according to claim 1, wherein said thrust surface (8') of the first actuator element (8; 280) and the thrust surface (5') of the second actuator element (5; 250) are one in front of the other.

10. An extemporaneous processing method of an ice cream product in a machinery (1) as claimed in any one of the preceding claims from 1 to 9, and comprising the steps of:
- Preparing a predetermined amount of ice cream product (100) within the processing chamber (40);
- Operating the two actuator elements (5, 8) so that they push the ice cream product from one part of the baffle to the other for a predetermined number of times.

11. A method, according to claim 9, wherein operation of the vertical actuator (7) is envisaged to allow the discharge of the product once the cycle of steps though the baffle (6) has terminated.

## Patentansprüche

1. Maschine (1) für die extemporierte Verarbeitung von Speiseeis (100), umfassend:
- eine Verarbeitungskammer (40), die zur Aufnahme des Speiseeisprodukts (100) geeignet ist und durch ein erstes Stellgliedelement (8; 280) und ein zweites Stellgliedelement (5; 250) begrenzt ist, das entlang einer Verarbeitungsrichtung beweglich ist;
- eine Öffnung (30), die den Zugang zu der Verarbeitungskammer (40) ermöglicht;
- mindestens eine Stauplatte (6; 260), die innerhalb der Verarbeitungskammer (40) angeordnet ist und die die Verarbeitungskammer (40) in zwei Teile (40', 40"; 240', 240") unterteilt, wobei die Stauplatte (6; 260) mit mehreren Durchgangsöffnungen ausgestattet ist;
- wobei das erste Stellgliedelement (8; 280) eine Schubfläche (8') und das zweite Stellgliedelement (5; 250) eine Schubfläche (5') umfasst;
**wobei** die Maschine **dadurch gekennzeichnet ist, dass** das erste und das zweite Stellgliedelement einander gegenüberliegen und die Stauplatte (6; 260) in dem durch die Schubflächen (5', 8') begrenzten Raum der Verarbeitungskammer (40) positioniert ist;
- und wobei ein Steuerungssystem umfasst ist, das das erste Stellgliedelement (8; 280) und das zweite Stellgliedelement (5; 250) gemäß einer Bewegung des Wegbewegens bzw. Näherbewegens von bzw. zu der Stauplatte (6; 260) derart steuert, dass das in der Verarbeitungskammer (40) platzierte Produkt (100) von den Stellgliedelementen (5, 8; 250, 280) mehrere Male von einem Teil zum anderen der Stauplatte durch die mehreren Öffnungen gedrückt wird, mit denen sie versehen ist.

2. Maschine (1) nach Anspruch 1, wobei ein Auslass (3) für das verarbeitete Produkt und ein bewegliches drittes Stellgliedelement (7) vorgesehen sind, das geeignet ist, das verarbeitete Produkt durch den Auslass zu drücken.

3. Maschine (1) nach Anspruch 1 oder 2, wobei die Stellgliedelement (5, 7, 8) in Form von Kolben der folgenden Art ausgebildet sind:
- elektrisch;
- hydraulisch;
- pneumatisch.

4. Maschine (1) nach einem der vorhergehenden Ansprüche, wobei das Steuerungssystem so programmiert ist, dass, wenn das erste Stellgliedelement (8) in Richtung der Stauplatte (6) vorwärts bewegt wird und das Produkt zwingt, die Öffnungen der Stauplatte zu durchdringen, das zweite Stellgliedelement (5) so rückwärts bewegt wird, dass es den Raum (40") für die Aufnahme des Produkts verlässt, um das zweite Stellgliedelement dann in Richtung der Stauplatte (6) so zu betätigen, dass das Produkt wieder durch die Stauplatte in die zur vorherigen Richtung entgegengesetzte Richtung gedrückt wird, während das erste Stellgliedelement zurück in die rückwärtige Position gebracht wird, um den Raum (40') für die Aufnahme des Produkts zu erzeugen.

5. Maschine (1) nach einem der vorhergehenden Ansprüche, wobei sich die Verarbeitungskammer (40) horizontal erstreckt.

6. Maschine (1) nach einem der vorhergehenden Ansprüche, wobei der Auslass durch eine Leitung ausgebildet ist, die sich vertikal bezüglich der Verarbeitungskammer (40) erstreckt.

7. Maschine (1) nach einem der vorhergehenden Ansprüche, wobei die Stauplatte (6) quer in der Verarbeitungskammer (40) positioniert ist, um die Verarbeitungskammer physisch in die beiden Teile (40', 40") zu unterteilen, und Durchgangslöcher aufweist, die sich entlang der Bewegungsrichtung der Stellgliedelemente erstrecken.

8. Maschine (1) nach einem der vorhergehenden Ansprüche, wobei die beiden Stellgliedelemente (250, 280) in einem Rahmen (200) integriert sind, der mithilfe eines Motorantriebs gesteuert wird.

9. Maschine nach Anspruch 1, wobei die Schubfläche (8') des ersten Stellgliedelements (8; 280) und die Schubfläche (5') des zweiten Stellgliedelements (5; 250) einander gegenüberliegend sind.

10. Extemporiertes Verarbeitungsverfahren eines Speiseeisprodukts in einer Maschine (1) nach einem der vorhergehenden Ansprüche 1 bis 9, umfassend die Schritte des:
- Vorbereitens einer vorbestimmten Menge eines Speiseeisprodukts (100) innerhalb der Verarbeitungskammer (40) ;
- Betätigen der beiden Stellgliedelemente (5, 8), sodass sie das Speiseeisprodukt eine vorbestimmte Anzahl von Malen von einem Teil der Stauplatte zum anderen drücken.

11. Verfahren nach Anspruch 9, wobei der Betrieb des vertikalen Stellglieds (7) vorgesehen ist, um den Austrag des Produkts zu ermöglichen, sobald der Zyklus der Schritte durch die Stauplatte (6) beendet ist.

## Revendications

1. Machine (1) pour le traitement extemporané de crème glacée (100) et comprenant :
- une chambre de traitement (40) adaptée pour recevoir le produit de crème glacée (100) et délimitée par un premier élément d'actionnement (8; 280) et un deuxième élément d'actionnement (5; 250) pouvant se déplacer le long d'une direction de traitement ;
- une ouverture (30) qui donne accès à ladite chambre de traitement (40) ;
- au moins un déflecteur (6; 260) placé à l'intérieur de la chambre de traitement (40) et qui sépare ladite chambre de traitement (40) en deux parties (40', 40"; 240', 240"), ledit déflecteur (6; 260) étant équipé d'une pluralité d'ouvertures traversantes ;
- dans laquelle ledit élément d'actionnement (8; 280) comprend une surface de poussée (8') et un deuxième élément d'actionnement (5; 250) comprend une surface de poussée (5'); la machine étant **caractérisée**
**en ce que** le premier et le second élément d'actionnement sont opposés l'un à l'autre et le déflecteur (6; 260) est positionné dans l'espace de la chambre de traitement (40) délimitée par lesdites surfaces de poussée (5', 8') ;
- et dans lequel est compris un système de commande qui commande ledit premier élément d'actionnement (8; 280) et ledit deuxième élément d'actionnement (5; 250) selon un mouvement d'éloignement/de rapprochement vers/depuis le déflecteur (6; 260) de telle façon que le produit (100) placé à l'intérieur de la chambre de traitement (40) est poussée par lesdits éléments d'actionnement (5, 8 ; 250, 280) plusieurs fois d'une partie à l'autre du déflecteur à travers la pluralité d'ouvertures dont elle est équipée.

2. Machine (1), selon la revendication 1, dans laquelle il est prévu une sortie (3) pour le produit traité et un troisième élément d'actionnement mobile (7) adapté pour pousser le produit traité à travers la sortie.

3. Machine (1), selon la revendication 1 ou 2, dans laquelle lesdits éléments d'actionnement (5, 7, 8) sont en forme de pistons, du type choisi parmi :
- électrique ;
- hydraulique ;
- pneumatique.

4. Machine (1), selon l'une quelconque des revendications précédentes, dans laquelle ledit système de contrôle est programmé de telle façon que, lorsque le premier élément d'actionnement (8) est avancé vers le déflecteur (6), forçant le produit à passer à travers les ouvertures du déflecteur, le deuxième élément d'actionnement (5) est déplacé en arrière de manière à laisser l'espace (40") destiné à recevoir le produit et ensuite faire fonctionner ledit deuxième élément d'actionnement vers le déflecteur (6) de manière à pousser à nouveau le produit à travers le déflecteur dans la direction opposée au précédent tandis que le premier élément d'actionnement est ramené dans la position arrière pour générer l'espace (40 ') destiné à recevoir le produit.

5. Machine (1), selon l'une quelconque des revendications précédentes, dans laquelle ladite chambre de traitement (40) s'étend horizontalement.

6. Machine (1), selon l'une quelconque des revendications précédentes, dans laquelle la sortie est formée par un conduit qui s'étend verticalement par rapport à la chambre de traitement (40).

7. Machine (1), selon l'une quelconque des revendications précédentes, dans laquelle le déflecteur (6) est positionné transversalement dans la chambre de traitement (40) afin de diviser physiquement la chambre de traitement en lesdites deux parties (40', 40") et avec des trous traversants qui s'étendent le long de la direction de mouvement desdits éléments d'actionnement.

8. Machine (1), selon l'une quelconque des revendications précédentes, dans laquelle les deux éléments d'actionnement (250, 280) font partie intégrante d'un cadre (200) commandé au moyen d'un entraînement par moteur.

9. Machine, selon la revendication 1, dans laquelle ladite surface de poussée (8') du premier élément d'actionnement (8; 280) et la surface de poussée (5') du second élément d'actionnement (5; 250) sont l'un en face de l'autre.

10. Procédé de traitement extemporané d'un produit de crème glacée dans une machine (1) selon l'une quelconque des revendications précédentes de 1 à 9, comprenant les étapes consistant à :
- préparer une quantité prédéterminée de produit de crème glacée (100) dans la chambre de traitement (40) ;
- faire fonctionner les deux éléments d'actionnement (5, 8) de manière à pousser le produit de créme glacée d'une partie du déflecteur à l'autre pendant un nombre de fois prédéterminé.

11. Procédé selon la revendication 9, dans lequel le fonctionnement de l'actionneur vertical (7) est envisagé pour permettre l'évacuation du produit une fois le cycle d'étapes à travers le déflecteur (6) terminé.
